# EUROPEAN PATENT APPLICATION

(11) **EP 3 296 944 A1**
(43) Date of publication of application: **21.03.2018**
(21) Application number: 16792396.0
(22) Date of filing: 28.01.2016
(51) Int. Cl.: G06Q 30/02

(54) **INFORMATION PROCESSING DEVICE, INFORMATION PROCESSING METHOD, AND PROGRAM**

(30) Priority: 11.05.2015 JP 2015096596
(71) Applicant: Sony Corporation, Tokyo 108-0075 (JP)
(72) Inventor: KOBAYASHI, Yoshiyuki, Tokyo 108-0075 (JP); KURATA, Masatomo, Tokyo 108-0075 (JP); TAKAOKA, Tomohisa, Tokyo 108-0075 (JP)
(74) Representative: MFG Patentanwälte Meyer-Wildhagen Meggle-Freund Gerhard PartG mbB
(86) International application number: PCT/JP2016/052491
(87) International publication number: WO 2016/181670

(57) **Abstract**

[Object] To provide an information processing apparatus, an information processing method, and a program, each of which is capable of providing, by using a prediction result regarding a certain user, useful information to another user.

[Solution] The information processing apparatus includes an output control unit configured to output, to a first user, prediction information indicating a prediction result of context information of a second user, the prediction information being related to the context information of the first user and being generated on the basis of a history of the context information of the second user.

## Description

### Technical Field

The present disclosure relates to an information processing apparatus, an information processing method, and a program.

### Background Art

In recent years, a technology of predicting future behavior of a user by using past information of the user and providing information based on a prediction result has attracted attention. For example, Patent Literature 1 cited below discloses a technology of learning an activity state of a user as a stochastic state transition model by using time-series data obtained from a wearable sensor, thereby calculating a route to a destination and time taken to reach the destination.

### Citation List

### Patent Literature

Patent Literature 1: JP 2011-059924A

### Disclosure of Invention

### Technical Problem

However, in the technology proposed by Patent Literature 1 cited above or the like, usefulness of information provided on the basis of a prediction result can be further improved. For example, a prediction result regarding a certain user is used only to provide information to the user.

In view of this, the present disclosure proposes an information processing apparatus, an information processing method, and a program, each of which is new, is improved, and is capable of providing, by using a prediction result regarding a certain user, useful information to another user.

### Solution to Problem

According to the present disclosure, there is provided an information processing apparatus including an output control unit configured to output, to a first user, prediction information indicating a prediction result of context information of a second user, the prediction information being related to the context information of the first user and being generated on the basis of a history of the context information of the second user.

In addition, according to the present disclosure, there is provided an information processing method including causing a processor to output, to a first user, prediction information indicating a prediction result of context information of a second user, the prediction information being related to the context information of the first user and being generated on the basis of a history of the context information of the second user.

In addition, according to the present disclosure, there is provided a program for causing a computer to function as an output control unit configured to output, to a first user, prediction information indicating a prediction result of context information of a second user, the prediction information being related to the context information of the first user and being generated on the basis of a history of the context information of the second user

### Advantageous Effects of Invention

As described above, according to the present disclosure, it is possible to provide, by using a prediction result regarding a certain user, useful information to another user. Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a view for describing an outline of an information processing system according to the present embodiment.
[FIG. 2] FIG. 2 is a block diagram showing an example of a logical configuration of the information processing system according to the present embodiment.
[FIG. 3] FIG. 3 is a view for describing a display example performed by the information processing system according to the present embodiment.
[FIG. 4] FIG. 4 is a view for describing a display example performed by the information processing system according to the present embodiment.
[FIG. 5] FIG. 5 is a view for describing a display example performed by the information processing system according to the present embodiment.
[FIG. 6] FIG. 6 is a view for describing a display example performed by the information processing system according to the present embodiment.
[FIG. 7] FIG. 7 is a view for describing a display example performed by the information processing system according to the present embodiment.
[FIG. 8] FIG. 8 is a view for describing a display example performed by the information processing system according to the present embodiment.
[FIG. 9] FIG. 9 is a view for describing a display example performed by the information processing system according to the present embodiment.
[FIG. 10] FIG. 10 is a view for describing a display example performed by the information processing system according to the present embodiment.
[FIG. 11] FIG. 11 is a view for describing a display example performed by the information processing system according to the present embodiment.
[FIG. 12] FIG. 12 is a view for describing a display example performed by the information processing system according to the present embodiment.
[FIG. 13] FIG. 13 is a flowchart showing an example of a flow of learning processing of a predictor executed in a server according to the present embodiment.
[FIG. 14] FIG. 14 is a flowchart showing an example of a flow of display processing of prediction information executed in the server according to the present embodiment.
[FIG. 15] FIG. 15 is a flowchart showing an example of a flow of selection processing of a second user executed in the server according to the present embodiment.
[FIG. 16] FIG. 16 is a flowchart showing an example of a flow of generation processing of prediction information executed in the server according to the present embodiment.
[FIG. 17] FIG. 17 is a block diagram showing an example of a hardware configuration of an information processing apparatus according to the present embodiment.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that description will be provided in the following order.
1. Outline
2. Configuration example
3. Technical features
   3.1. Context information
   3.2. Learning and prediction
   3.3. Selection of second user
   3.4. Generation of prediction information
   3.5. Setting of permission/non-permission of output
   3.6. Filtering of generated prediction information
   3.7. Output of prediction information of user himself/herself
4. Operation processing examples
5. Hardware configuration example
6. Conclusion

### <<1. Outline>>

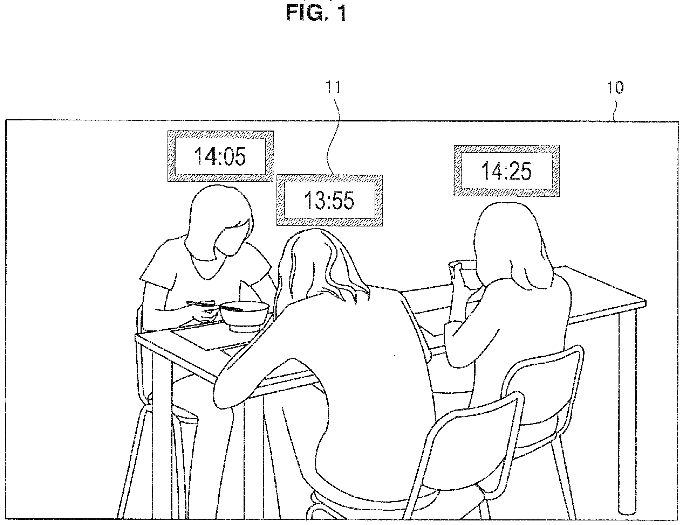

First, an outline of an information processing system according to an embodiment of the present disclosure will be described with reference to FIG. 1.

FIG. 1 is a view for describing the outline of the information processing system according to the present embodiment. An image 10 shown in FIG. 1 is an image in which information 11 is displayed while being superimposed on an image obtained by capturing a real space with the use of an augmented reality (AR) technology. The AR technology is a technology of superimposing additional information on a real world and presenting the additional information to a user. The information presented to the user in the AR technology is also referred to as "annotation" and can be visualized by using various forms of a virtual object such as text, an icon, and animation.

The user can see an image in which annotations shown in FIG. 1 are superimposed and displayed by using various kinds of user terminals (terminal devices). Specific examples of the user terminals encompass a smartphone, a head mounted display (HMD), and a car navigation system. Hereinbelow, description will be provided by assuming that the user terminal is realized as a see-through HMD as an example. The see-through HMD is a device capable of displaying an annotation while superimposing the annotation on a scene of a real space by causing a display unit arranged in front of eyes of the user in a state in which the device is mounted thereon to display an image, such as text or a figure, while the display unit is in a transparent or semitransparent state as it is. Hereinafter, an image (including a background that is visually recognized while being transmitted and an annotation that is displayed while being superimposed), which is displayed on the display unit (see-through display) of the user terminal, is also referred to as "real space image". That is, the image 10 is a real space image.

The real space image 10 shown in FIG. 1 is an example of an image displayed when the user goes to a dining room at lunchtime. In the real space image 10, an annotation 11 showing a prediction result of a remaining time until each of other users who is having a meal leaves his/her seat is associated with each of the other users and is displayed. With this, the user can, for example, wait in the vicinity of another user who is predicted to have the least remaining time.

Herein, for a user whose remaining time is predicted, it cannot be said that it is quite useful to present information indicating a prediction result showing the remaining time until the user leaves his/her seat to the user himself/herself. Meanwhile, as in the example shown in FIG. 1, information indicating a prediction result of a certain user can be useful to the other users. The information processing system according to the present embodiment can improve convenience for all users by mutually causing another user to visualize such information indicating a prediction result of a certain user.

Hereinabove, the outline of the information processing system according to the present embodiment has been described. Next, a configuration example of the information processing system according to the present embodiment will be described.

Note that, hereinafter, a target from whom information is collected by the information processing system according to the present embodiment and/or to whom information is presented will be referred to as "user". Further, a user to whom information is presented will also be referred to as "first user". A user associated with the presented information will also be referred to as "second user". That is, information indicating a prediction result regarding the second user is presented to the first user. Further, a user other than the first user or the second user will be referred to as "third user" in some cases. Hereinafter, in a case where it is unnecessary to differentiate the first user, the second user, and the third user in particular, those users will be simply referred to as "users".

### <<2. Configuration example>>

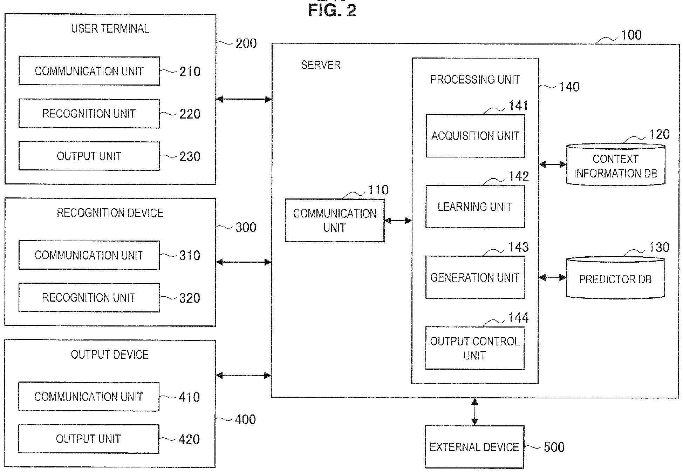

FIG. 2 is a block diagram showing an example of a logical configuration of an information processing system 1 according to the present embodiment. As shown in FIG. 2, the information processing system 1 according to the present embodiment includes a server 100, a user terminal 200, a recognition device 300, an output device 400, and an external device 500.

### (1) Server

As shown in FIG. 2, the server 100 includes a communication unit 110, a context information DB 120, a predictor DB 130, and a processing unit 140.

The communication unit 110 is a communication module for transmitting/receiving data between the server 100 and another device via a wired/wireless network. For example, the communication unit 110 communicates with the user terminal 200, the recognition device 300, the output device 400, and the external device 500 directly or indirectly via another node.

The context information DB 120 has a function of storing context information of a user. The context information is information on the user. Details thereof will be described below.

The predictor DB 130 has a function of storing a predictor for predicting context information.

The processing unit 140 provides various functions of the server 100. As shown in FIG. 2, the processing unit 140 includes an acquisition unit 141, a learning unit 142, a generation unit 143, and an output control unit 144. Note that the processing unit 140 can further include another constituent element in addition to those constituent elements. That is, the processing unit 140 can also perform operation in addition to operation of those constituent elements.

The acquisition unit 141 has a function of acquiring context information. For example, the acquisition unit 141 acquires context information recognized by the user terminal 200 and the recognition device 300. Then, the acquisition unit 141 stores the acquired context information on the context information DB 120.

The learning unit 142 has a function of learning a time-series change in context information. For example, the learning unit 142 learns a predictor for predicting a time-series change in context information on the basis of a history of the context information stored on the context information DB 120. Then, the learning unit 142 stores the learned predictor on the predictor DB 130.

The generation unit 143 has a function of generating prediction information (annotation) to be presented to the first user. For example, the generation unit 143 generates prediction information on the basis of a history of context information the second user. Specifically, the generation unit 143 inputs real-time context information of the second user acquired by the acquisition unit 141 to a predictor of the second user stored on the predictor DB 130, thereby predicting context information of the second user. Then, the generation unit 143 generates prediction information indicating a prediction result of the context information of the second user.

The output control unit 144 has a function of outputting prediction information generated by the generation unit 143 to the first user serving as a target. For example, the output control unit 144 causes the user terminal 200 of the first user or the environment-installation type output device 400 in the vicinity of the user terminal 200 to output prediction information.

Herein, words such as an environment type and an environment-installation type will be used for a device that is fixedly or semi-fixedly provided in a real space. For example, digital signage is an environment-installation type output device 400. Further, a monitoring camera is an environment-installation type recognition device 300.

### (2) User terminal

As shown in FIG. 2, the user terminal 200 includes a communication unit 210, a recognition unit 220, and an output unit 230.

The communication unit 210 is a communication module for transmitting/receiving data between the user terminal 200 and another device via a wired/wireless network. For example, the communication unit 210 communicates with the server 100 directly or indirectly via another node.

The recognition unit 220 has a function of recognizing context information. The recognized context information is transmitted to the server 100 by the communication unit 210. The recognition unit 220 may include various kinds of sensors and recognizes context information on the basis of detected sensor information.

For example, the recognition unit 220 can include various sensors such as a camera, a microphone, an acceleration sensor, a gyro sensor, a global positioning system (GPS), and a geomagnetic sensor. The recognition unit 220 may further include a communication interface for detecting information on a surrounding electric wave such as wireless fidelity (registered trademark, Wi-Fi) and Bluetooth (registered trademark). The recognition unit 220 may further include a sensor for detecting information on an environment such as a temperature, humidity, a wind speed, barometric pressure, an illuminance, and substances (stress substance such as pollen, smell, and the like). The recognition unit 220 may further include a sensor for detecting biological information such as a body temperature, perspiration, an electrocardiogram, a pulse wave, a heart rate, blood pressure, blood sugar, myoelectricity, and a brain wave. The recognition unit 220 may further include an input unit for accepting input of context information from the user.

The output unit 230 has a function of outputting information from the server 100. For example, the output unit 230 can include a display unit capable of displaying an image, a speaker capable of outputting sound, a vibration motor capable of vibrating, and the like. Note that, in a case where the user terminal 200 is realized as a see-through HMD, the output unit 230 can be realized as a see-through display.

### (3) Recognition device

As shown in FIG. 2, the recognition device 300 includes a communication unit 310 and a recognition unit 320. Configurations of the communication unit 310 and the recognition unit 320 are similar to those of the communication unit 210 and the recognition unit 220.

Note that the recognition device 300 can be realized as, for example, a wearable device, an environment-installation type camera, an environment-installation type microphone, Internet of Things (IoT), or Internet of Everything (IoE).

### (4) Output device

As shown in FIG. 2, the output device 400 includes a communication unit 410 and an output unit 420. Configurations of the communication unit 410 and the output unit 420 are similar to those of the communication unit 210 and the output unit 230.

Note that the output device 400 can be realized as, for example, digital signage, an in-vehicle guide display device, a projection mapping device, or an audio guide device.

### (5) External device

The external device 500 is a device having information on a user. For example, the external device 500 is a server for providing a service using a social networking service (SNS) server, an email server, and position information. The external device 500 transmits context information of the user to the server 100.

Note that, in FIG. 2, a single user terminal 200, a single recognition device 300, a single output device 400, and a single external device 500 are shown. However, there may be a plurality of user terminals 200, a plurality of recognition devices 300, a plurality of output devices 400, and a plurality of external devices 500.

As described above, the information processing system 1 includes not only the user terminal 200 but also the environment-installation type recognition device 300 and output device 400. Therefore, the information processing system 1 can generate and output prediction information of a user who has no user terminal 200 and can also output prediction information to a user who has no user terminal 200 as a target.

Hereinabove, the configuration example of the information processing system 1 according to the present embodiment has been described. Next, technical features of the information processing system 1 according to the present embodiment will be described.

### <<3. Technical features>>

### <3.1. Context information>

Context information is information indicating a status in which a user is put in. The context information may be recognized on the basis of various pieces of information on the user or may be input by the user. Hereinafter, examples of the context information will be described.

### (1) Information indicating behavior of user

For example, the context information may include information indicating behavior of a user.

Recognized behavior can be classified into two types: a basic behavior that is a basic behavior element and a high-order behavior that is a combination of basic behaviors. Examples of the basic behavior encompass sitting and keeping still, standing and keeping still, walking, running, being on an elevator (up, down), being on an escalator (up, down), and riding on a vehicle (bicycle, train, car, bus, ..., other vehicles). Examples of the high-order behavior encompass moving (commuting to school, returning to home, ..., other kinds of moving), studying, working (manual labor, desk work, ..., (further detailed kind of work)), playing (kind of play), playing sport (kind of sport), shopping (genre of shopping), and having a meal (content of meal).

For example, the information indicating behavior of the user can be recognized on the basis of sensor information detected by the acceleration sensor, the gyro sensor, the geomagnetic sensor, and the like included in the user terminal 200 carried by the user. In addition, the information indicating behavior of the user can be recognized on the basis of, for example, an image recognition result of a captured image captured by a monitoring camera or the like. Further, for example, in a case where a running application is being utilized in the user terminal 200, it is recognized that the user is running. That is, the information indicating behavior of the user can be recognized on the basis of an application that is being utilized in the user terminal 200. Further, the information indicating behavior of the user can be recognized on the basis of, for example, a state setting, such as working/being away from desk, which is performed in a messaging application that is being utilized in the user terminal 200. Note that those recognition methods may be combined, or another arbitrary recognition method may be used.

### (2) Information indicating position of user

For example, the context information may include information indicating a position of the user.

The information indicating a position can include not only information indicating an absolute geographic coordinate but also information indicating a relative coordinate from a certain object, inside or outside, a height, and the like. Specifically, the information indicating a position can include information indicating latitude, longitude, altitude, an address, a GEO tag, a name of a building, a name of a store, and the like.

For example, the information indicating a position can be recognized by a positioning technology using a GPS, an autonomous positioning technology, and the like. Further, the information indicating a position can be recognized on the basis of sensor information of the acceleration sensor, the gyro sensor, the geomagnetic sensor, and the like included in the user terminal 200. Further, the information indicating a position can be recognized by a human detection technology, a face recognition technology, and the like based on an image captured by an environment-installation type camera. Further, the information indicating a position can be recognized on the basis of a communication result and the like regarding an environment-installation type communication device capable of estimating a distance from the user terminal 200 (i.e., proximity relationship), such as Bluetooth and a beacon. Further, the information indicating a position can be recognized on the basis of a result of the user terminal 200 utilizing a service using position information. Note that those recognition methods may be combined, or another arbitrary recognition method may be used.

### (3) Information indicating line of sight

For example, the context information may include information indicating a line of sight of the user.

The information indicating a line of sight can include an object receiving attention of the user, a characteristic of another user receiving attention of the user, context information of another user who receives attention, context information of the user himself/herself obtained at the time of paying attention thereto, and the like. For example, the information indicating a line of sight may be information indicating to which another user performing which behavior the user pays attention when the user himself/herself is performing which behavior.

For example, the information indicating a line of sight can be recognized on the basis of, for example, a recognition result of a direction of a line of sight based on a captured image and depth information obtained by a stereo camera that is provided in an HMD so that an eyeball of the user is an image capturing range. Further, the information indicating a line of sight can be recognized on the basis of information indicating a position and a posture of the user terminal 200 in a real space, the position and the posture being recognized by a publicly-known image recognition technology such as a structure from motion (SfM) method or a simultaneous localization and mapping (SLAM) method. Further, the information indicating a line of sight can be recognized on the basis of myoelectricity in the vicinity of the eyeball. Further, the information indicating a line of sight can be recognized by a face recognition technology, a line-of-sight detection technology, or the like based on an image captured by an environment-installation type camera. Note that those recognition methods may be combined, or another arbitrary recognition method may be used.

### (4) Information output by user

For example, the context information may include information output by the user.

The information output by the user can include information indicating content uttered by the user, text written by the user, and the like.

For example, the information output by the user can be recognized by sound recognition in which sound acquired by the microphone of the user terminal 200 is used as a target. Further, the information output by the user can be recognized by sound recognition in which sound acquired by an environment-installation type microphone, a laser Doppler sensor, or the like is used as a target. Further, the information output by the user can be recognized by image recognition in which a captured image of a mouth captured by an environment-installation type camera is used as a target. Further, the information output by the user can also be recognized on the basis of content of an email transmitted by the user, content of a message, a post on an SNS, a search keyword, or the like. Note that those recognition methods may be combined, or another arbitrary recognition method may be used.

### (5) Information indicating state of user

For example, the context information may include information indicating a state of the user.

The information indicating a state of user can include information indicating an emotion of the user, a physical condition of the user, whether or not the user is sleeping, and the like.

For example, the information indicating a state of the user can be recognized by using biological information. Further, the information indicating a state of the user can be recognized on the basis of an expression of a face of the user captured as an image by an environmentally-installed camera. Further, the information indicating a state of the user can be recognized on the basis of content uttered by the user or text written by the user. Note that those recognition methods may be combined, or another arbitrary recognition method may be used.

### (6) Attribute information of user

For example, the context information may include attribute information of the user.

The attribute information can include information indicating sex, birthday (age), an occupation, a career, addresses (home, school, office, and the like), a hobby, favorite food, favorite content (music, movie, book, and the like), a life log (a place where the user frequently visits, a travel history, and the like), a disease, a medical history, and the like.

For example, the attribute information can be recognized on the basis of input to an application by the user, a post on an SNS, or the like. Further, the attribute information can be recognized on the basis of a user feedback or the like to a shopping service or a content distribution service (for example, purchasing, a reproduction history, or evaluation information of a commodity or content). Further, the attribute information can be recognized on the basis of a use history or operation history of the user terminal 200. Further, the attribute information can be recognized by image recognition in which a captured image captured by an environment-installation type camera is used as a target. More specifically, for example, age and sex can be recognized on the basis of an image of a face part, and an occupation can be recognized on the basis of an image of a clothes part. Further, the attribute information can be recognized by a time-series change in position information. More specifically, for example, a place where the user stays for a long time at night can be recognized as the user's home, and a place where the user stays for a long time in daytime can be recognized as an office or school. Note that those recognition methods may be combined, or another arbitrary recognition method may be used.

### (7) Information indicating human relationship of user

For example, the context information may include information indicating a human relationship of the user.

The information indicating a human relationship can include information indicating with whom the user stays, a family relationship, a friendship, a degree of intimacy, and the like.

For example, the information indicating a human relationship can be recognized on the basis of input to an application by the user, a post on an SNS, or the like. Further, the information indicating a human relationship can be recognized on the basis of a length of time for which the user and a person stay together, an expression of the user when the user and a person stay together, or the like. Further, the information indicating a human relationship can be recognized on the basis of whether or not the user and a person live in the same home, whether or not the user and a person work in the same office or go to the same school, or the like.

Hereinabove, the examples of the context information have been described. The context information may include at least any one of pieces of the information described above.

Recognition processing of context information may be performed by the user terminal 200 and the recognition device 300 or may be performed by the server 100. In a case where the recognition processing is performed in the server 100, live sensor information is transmitted/received between the user terminal 200 and the recognition device 300 and the server 100, and therefore the recognition processing is desirably performed in the user terminal 200 and the recognition device 300 in view of a communication amount.

Further, recognized context information may be context information that is not directly predicted, as long as the recognized context information is useful to predict context information. For example, even in a case where an utterance is not predicted, content of an utterance may be recognized in a case where next behavior is predicted on the basis of the content of the utterance.

As described above, context information can be recognized without active input by the user. This reduces a burden on the user. Note that information actively input by the user, such as input of a schedule and input of a destination to a car navigation system, may also be used to recognize context information.

### <3.2. Learning and prediction>

The server 100 (for example, learning unit 142) learns a predictor. Then, the server 100 (for example, generation unit 143) predicts context information by using the predictor.

Learning of a predictor can be performed by using a technology such as a state transition model, a neural network, deep learning, a hidden Markov model (HMM), a k-nearest neighbor algorithm method, a Kernel method, or a support vector machine (SVM). Examples of a technology regarding behavior encompass a technology of predicting future behavior by extracting behavioral habituation of a target person and a technology of predicting future movement by extracting a movement pattern of a target person.

A predictor may be learned for each user, or a common predictor may be learned for a plurality of users or all users. For example, a common predictor in a family unit, an office unit, or a friend unit can be learned. Further, learning of a predictor may be performed for each recognition unit 220, i.e., for each user terminal 200, or for each recognition device 300.

A predictor may be considered to be a model that expresses a dependence relationship (for example, time-series change) between a plurality of pieces of context information which are generated on the basis of a history of the context information. At the time of prediction processing, context information acquired in real time is input to the predictor, and therefore context information having a dependence relationship (for example, predicted to be acquired at next time in time series) is output. For example, when behavior of the user at a current time, a position of the user, content output by the user, a line of sight of the user, a state of the user, attribute information of the user, and a human relationship of the user are input to the predictor, prediction results of future behavior of the user, a position of the user, content output by the user, a line of sight of the user, a state of the user, attribute information of the user, and a human relationship of the user are output. The generation unit 143 generates prediction information indicating the prediction results output from the predictor as described above.

### <3.3. Selection of second user>

The server 100 (for example, generation unit 143 and output control unit 144) displays, to the first user, prediction information related to context information of the first user. For that, the server 100 selects which user's prediction information is displayed to the first user, i.e., selects which user is set as the second user.

For example, the server 100 displays prediction information of the second user selected from a plurality of other users on the basis of context information of the first user. With this, the first user can know prediction information of a user corresponding to a status in which the first user is put in (i.e., context information). Therefore, a real space image is prevented from being complicated because an excessive number of pieces of prediction information are displayed.

Specifically, the server 100 may display prediction information of the second user who is determined to have context information related to that of the first user. In the example shown in FIG. 1, the first user (user who is seeing the real space image 10) selects another user who is having a meal in a dining room, the another user being related to context information indicating that the first user is in the dining room and is to have a lunch, as the second user. As described above, the first user can know prediction information of a user who is related to a status in which the first user is put in or is to be put in.

Further, the server 100 may display prediction information of the second user who is determined to receive attention of the first user. In the example shown in FIG. 1, another user who is sitting in a seat in which the first user desires to sit, the another user being determined to receive attention of the first user, is selected as the second user. As described above, the first user can know prediction information of a user whom the first user desires to know.

Further, the server 100 may display prediction information of the second user who is determined to have context information similar to that of the third user who has received attention of the first user in the past. In the example shown in FIG. 1, another user who is currently sitting in a seat, the another user being similar to another user who has received attention of the first user in the past and has sat in the same seat in which the first user desires to sit, is selected as the second user. As described above, the first user can know prediction information of a user similar to a user whose prediction information has been desired to be known by the first user in the past.

### <3.4. Generation of prediction information>

The server 100 (for example, generation unit 143 and output control unit 144) displays prediction information related to context information of the first user to the first user. At that time, the server 100 (for example, generation unit 143 and output control unit 144) displays prediction information generated on the basis of context information of the second user. In other words, the server 100 controls content of prediction information to be displayed on the basis of context information of the first user and the second user. With this, the first user can know prediction information whose content corresponds to a status in which the first user is put in.

Specifically, the server 100 may display different pieces of prediction information depending on whether or not the second user is moving. For example, in a case where it is determined that the second user is moving, the server 100 displays prediction information indicating a prediction result of a movement locus of the second user. With this, the first user can know in advance whether or not a movement locus of the first user and a movement locus of the second user cross each other. Meanwhile, in a case where it is determined that the second user is not moving, the server 100 displays prediction information indicating a time at which the second user is predicted to start moving. With this, for example, the first user can move while grasping, for example, a remaining time until the second user starts moving. A specific display example will be described in detail below.

Note that a remaining time in prediction information can be considered to be a remaining time until arbitrary behavior is started or is terminated. For example, a remaining time until movement is started is a remaining time until stopping behavior is terminated. In addition, for example, a remaining time until movement is stopped after the movement is started can be displayed as prediction information.

Further, the server 100 may display prediction information corresponding to a human relationship between the first user and the second user. For example, regarding the second user having a high degree of intimacy with the first user, the server 100 may display detailed prediction information, and, regarding the second user having a low degree of intimacy with the second user, the server 100 may display simplified prediction information or hide the prediction information. With this, the first user does not see unnecessary prediction information, and the second user can protect privacy.

Further, in a case where a history of context information of the second user does not exist or is not enough, the server 100 may display prediction information generated on the basis of a history of context information of the third user who is determined to have attribute information similar to that of the second user. For example, regarding the second user who visits a café for the first time, the server 100 may perform, for example, prediction of a staying time and behavior on the basis of recognition results of age, an occupation, and the like of the second user by using a predictor of the third user whose age and occupation are similar thereto, thereby displaying prediction information. Note that a case where a history of context information is not enough means, for example, a case where prediction accuracy of a predictor is less than a threshold. With this, even in a case where learning regarding the second user is not enough, it is possible to appropriately present prediction information to the first user.

Further, the server 100 may preferentially display prediction information indicating a prediction result of context information having high prediction accuracy. This prevent the first user from being confused by wrong prediction information.

Further, the server 100 may display prediction information of a plurality of second users on a map, instead of a real space image. With this, the first user can visually recognize prediction information of the plurality of second users from a bird's-eye view. Such display is useful to, for example, a manager of an amusement park.

Note that the server 100 may display a plurality of pieces of prediction information on a single second user. For example, the server 100 may display prediction information indicating prediction results of a plurality of different kinds of context information.

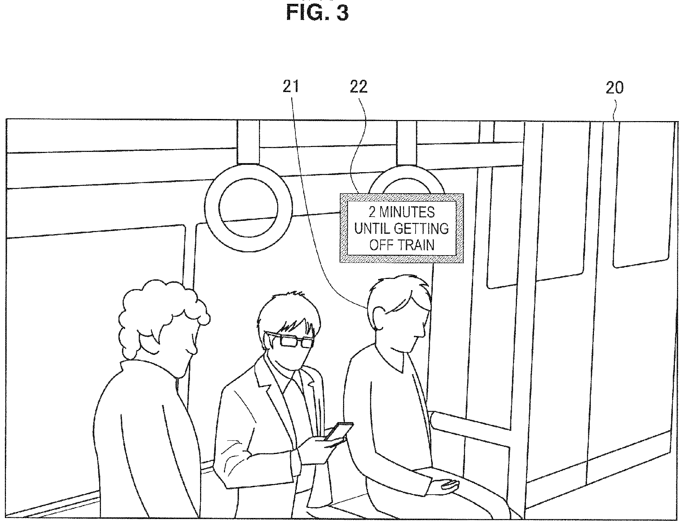

Hereinafter, specific display examples will be described with reference to FIGS. 3 to 11.

### (1) Remaining time

FIG. 3 is a view for describing a display example performed by the information processing system 1 according to the present embodiment. In a real space image 20 shown in FIG. 3, a state of inside of a train seen from the first user who is riding on the train is displayed. Further, regarding a second user 21 who is determined to be sitting in a seat and not to be moving, prediction information 22 indicating a predicted time until the second user 21 leaves the seat (i.e., gets off the train) (i.e., time at which the second user 21 is predicted to start moving) is displayed in the real space image 20. According to the prediction information 22, the second user 21 is predicted to get off the train two minutes later. With this, the first user can prepare to make way for the second user who is to get off the train or prepare to sit in the seat in which the second user is sitting. Also for the second user, it is expected that users therearound make preparations for the second user getting off the train in advance, and therefore it is possible to get off the train more comfortably. As described above, opening the prediction information of the second user to the first user can be useful to the first user and also to the second user.

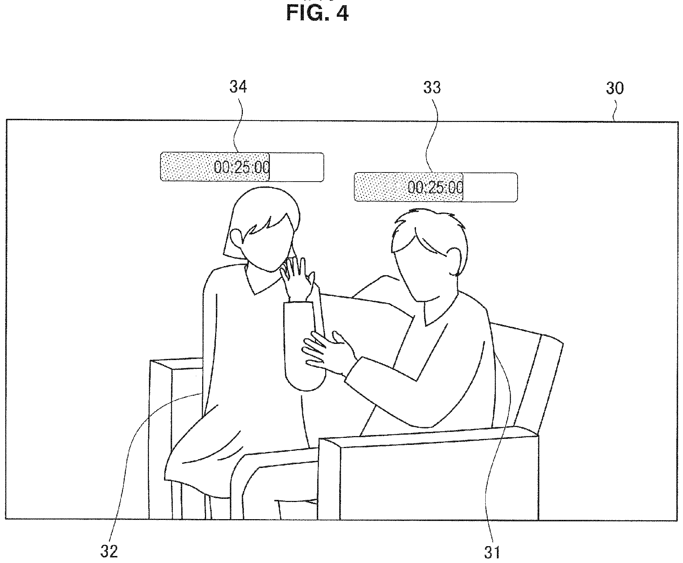

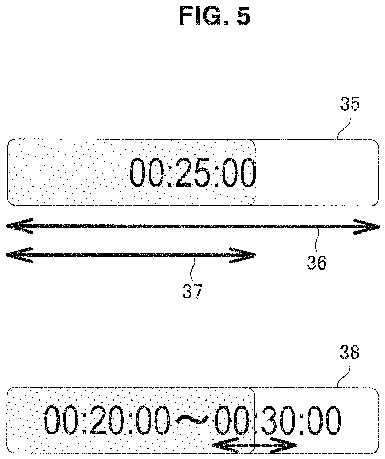

FIG. 4 is a view for describing a display example performed by the information processing system 1 according to the present embodiment. Regarding second users 31 and 32 who are determined to be sitting in seats and not to be moving, pieces of prediction information 33 and 34 indicating predicted times until the second users 31 and 32 leave the seats (i.e., times at which the second users 31 and 32 are predicted to start moving) are displayed in a real space image 30 shown in FIG. 4. According to the pieces of prediction information 33 and 34, the second users 31 and 32 are predicted to leave the seats twenty-five minutes later. Herein, as shown in FIG. 4, in the pieces of prediction information 33 and 34, a proportion of a remaining time or elapsed time of behavior of sitting in the seat to the whole time is displayed in the form of bar. Display using a bar can be various kinds of forms as shown in FIG. 5.

FIG. 5 is a view for describing display examples of the information processing system 1 according to the present embodiment. FIG. 5 shows specific examples of prediction information displayed in the form of bar. In prediction information 35, assuming that a length of time from start of current behavior to predicted end time is 100% (reference sign 36), time elapsed since the current behavior is started is expressed by a length of a bar (reference sign 37). The example shown in FIG. 4 corresponds to this. Prediction information 38 is a display method that can be used in a case where prediction accuracy is low and shows that prediction may be changed. A predicted time can be increased/decreased in accordance with the latest acquired context information. However, because such a proportion is displayed, the first user can predict variation of an approximate end time.

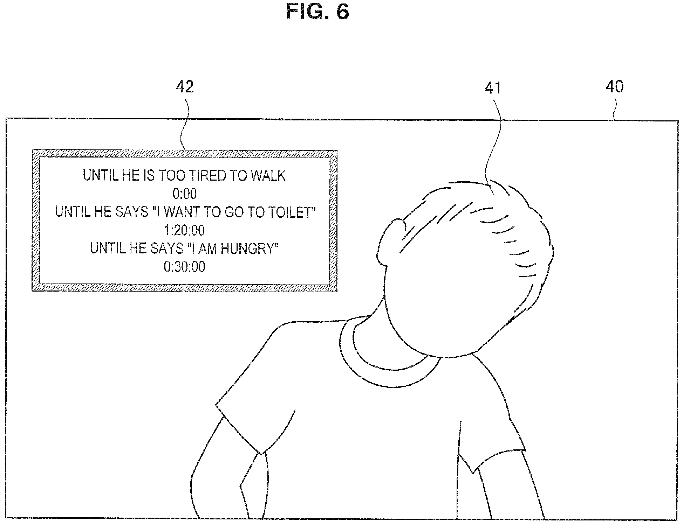

Hereinabove, there has been described an example where, regarding the second user who is not moving, prediction information indicating a remaining time until the second user starts moving is displayed. However, the present technology is not limited to this example. For example, information indicating a remaining time until the second user starts (performs) or terminates arbitrary behavior may be displayed. For example, information indicating a remaining time until the second user utters a specific word may be displayed as described with reference to FIG. 6.

FIG. 6 is a view for describing a display example performed by the information processing system 1 according to the present embodiment. In a real space image 30 shown in FIG. 6, a state of a child who is taking a walk with his family, which is seen from a parent serving as the first user, is displayed. In the real space image 40, prediction information 42 indicating a remaining time until a child 41 serving as the second user performs specific behavior is displayed. The prediction information 42 shows that the child is predicted to "be too tired to walk" already, is predicted to say "I want to go to the toilet" one hour and twenty minutes later, and is predicted to say "I am hungry" thirty minutes later. With this display, the parent can behave to meet demand of the child in advance. As described above, a plurality of users who behave together mutually know their prediction information, and therefore a trouble caused by behavior of a plurality of people is prevented beforehand.

### (2) Movement locus

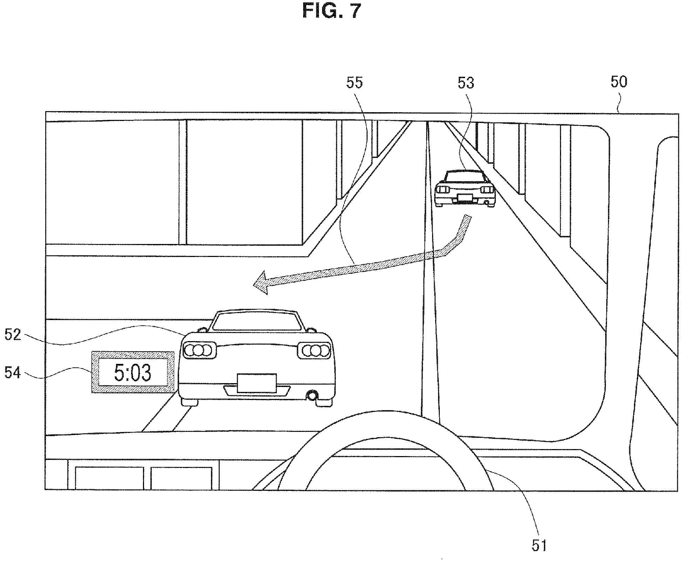

FIG. 7 is a view for describing a display example performed by the information processing system 1 according to the present embodiment. In a real space image 50 shown in FIG. 7, pieces of prediction information 54 and 55 of cars 52 and 53 (specifically, a second user who drives the car 52 and a second user who drives the car 53) which are seen from a first user who is driving a car 51. Regarding the car 52 that is determined not to be moving (for example, be parked), prediction information 54 indicating a predicted time until the car 52 starts moving is displayed. A remaining time is five minutes and three seconds, i.e., is enough, and therefore the first user can pass the car 52 at ease. Further, regarding the car 53 that is determined to be moving (for example, be running or be temporarily stopped for turning right), prediction information 55 indicating a prediction result of a movement locus is displayed. The first user can easily know that the movement locus crosses a direction of travel and can therefore safely stop. By displaying this prediction information, road traffic safety is improved.

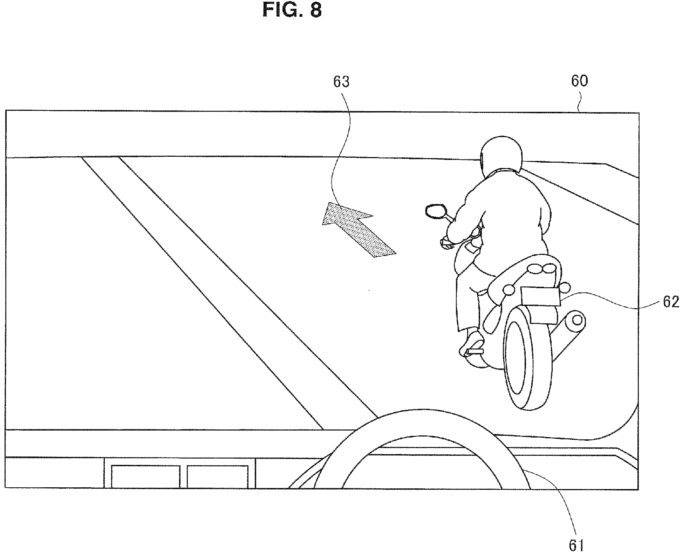

FIG. 8 is a view for describing a display example performed by the information processing system 1 according to the present embodiment. In a real space image 60 shown in FIG. 8, prediction information 63 indicating a prediction result of a movement locus of a motorcycle 62 (specifically, a second user who drives the motorcycle 62), which is seen from the first user who is driving a car 61, is displayed. According to the prediction information 63, the motorcycle 62 runs straight, and therefore the first user can cause the car 61 to run straight without considering a lane change of the motorcycle 62. By displaying such prediction information, comfortability of driving is improved.

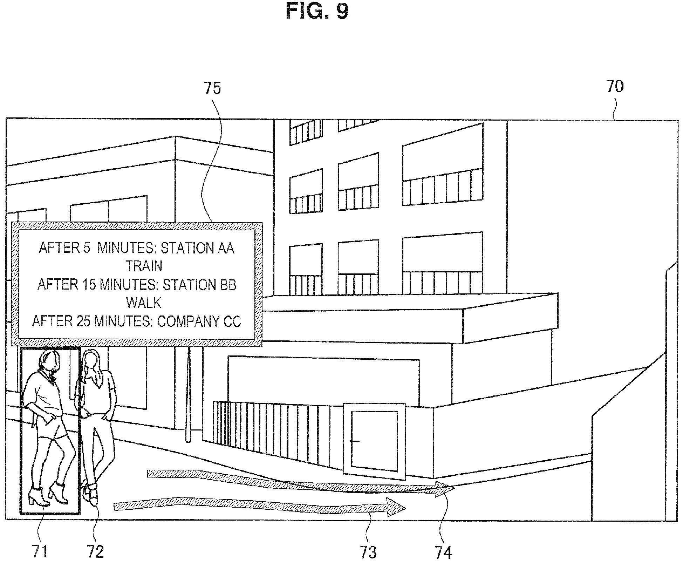

FIG. 9 is a view for describing a display example performed by the information processing system 1 according to the present embodiment. In a real space image 70 shown in FIG. 9, pieces of prediction information 73 and 74 indicating prediction results of movement loci of other walking second users 71 and 72, who are seen from the first user who is walking on a road, are displayed. With this, the first user can walk so as not to bump against the second users 71 and 72. Further, in a case where the first user pays attention to the second user 71, it is possible to display prediction information 75 indicating a more detailed prediction result. The prediction information 75 includes a list of behavior plans of the second user 71, such as arriving at a station AA five minutes later, getting on a train and moving, arriving at a station BB fifteen minutes later, moving on foot, and arriving at a company CC twenty-five minutes later.

### (3) Degree of attention

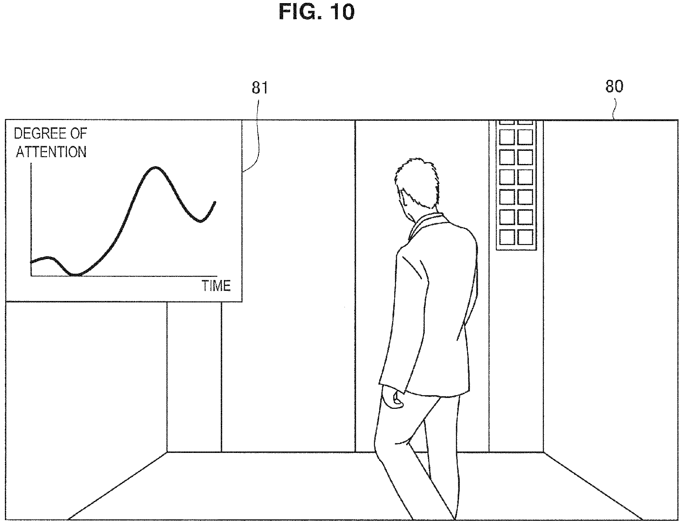

FIG. 10 is a view for describing a display example performed by the information processing system 1 according to the present embodiment. In a real space image 80 shown in FIG. 10, a state of inside of an elevator is displayed. Further, in the real space image 80, prediction information 81 indicating a prediction result of how many second users pay attention to the first user is displayed. More specifically, in the prediction information 81, a time-series change in the number of people who are predicted to pay attention to the first user is displayed. With this, the first user can, for example, groom himself before, for example, a door is opened and the first user receives attention.

### (4) Real-time context information

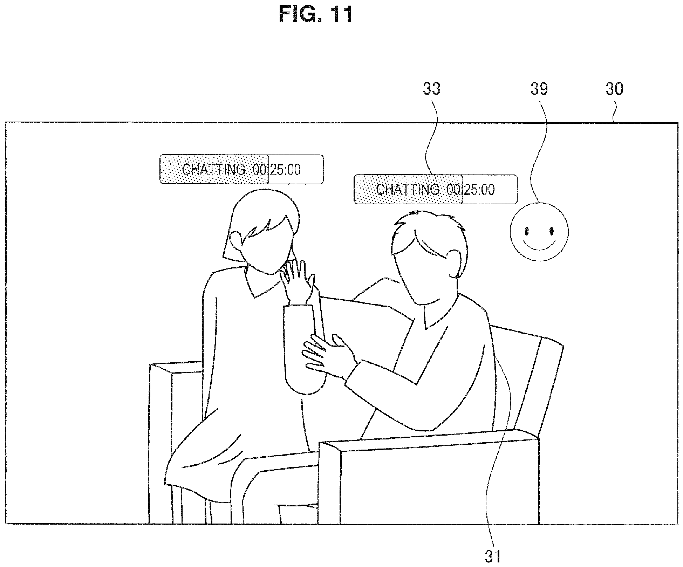

FIG. 11 is a view for describing a display example performed by the information processing system 1 according to the present embodiment. In the real space image 30 shown in FIG. 11, information 39 indicating a current emotion of the second user 31 is displayed, in addition to the real space image 30 shown in FIG. 4. The information 39 indicating an emotion shows that the second user 31 is currently pleased. As described above, the server 100 may display not only the prediction information 33 but also context information of the second user 31. With this, the first user can perform behavior based on a status in which the second user is currently put in. For example, the first user helps the second user in a case where the second user is in trouble.

### (5) Other

In addition, the server 100 can display various kinds of prediction information. For example, the server 100 may display a keyword that is predicted to be uttered by the second user. In that case, the first user can have a fun conversation by using the keyword.

### <3.5. Setting of permission/non-permission of output>

The server 100 (for example, generation unit 143 and output control unit 144) can set permission/non-permission of output of prediction information of a user to another user. From a point of view of display of prediction information to the first user, the server 100 can set permission/non-permission of output of prediction information of the second user to the first user.

For example, the server 100 displays prediction information that is permitted to be displayed by the second user. With this, the second user can protect privacy.

Permission can be performed on the basis of an instruction from the second user. In that case, the second user directly sets permission/non-permission of opening of prediction information. In addition, permission can be performed on the basis of a setting related to a position of the second user. For example, the following setting can be performed: opening of detailed prediction information is not permitted when the second user is in a place in the vicinity of the second user's home. In addition, permission can be performed on the basis of a setting related to a human relationship between the first user and the second user. For example, the following setting can be performed: prediction within ten minutes is permitted to be opened to all people, prediction within an hour is permitted to be opened to friends, and prediction over an hour is not permitted to be opened to any one.

### <3.6. Filtering of generated prediction information>

The server 100 (for example, generation unit 143 and output control unit 144) may filter generated prediction information. For example, the server 100 displays a part of generated prediction information and does not display another part thereof.

For example, the server 100 provides an interaction function between displayed prediction information and the first user. Then, in a case where prediction information displayed to the first user as a target is deleted by the first user (display is eliminated), the server 100 stores the deleted prediction information and does not display the same kind of prediction information thereafter. With this, only appropriate prediction information is presented.

### <3.7. Output of prediction information of user himself/herself>

The server 100 (for example, generation unit 143 and output control unit 144) may display prediction information indicating a prediction result of context information of the first user to the first user himself/herself as a target. In other words, the server 100 may display prediction information of the first user displayed to another user as a target so that the prediction information can also be visually recognized by the first user himself/herself. With this, the first user can know which prediction information of the first user is opened to another user.

As described above with reference to FIG. 1, generally, it cannot be said that it is quite useful to present a prediction result of a person himself/herself to the person. However, from a point of view of how the prediction result of the person himself/herself is opened to another person, it can be useful to present the prediction result of the person himself/herself to the person.

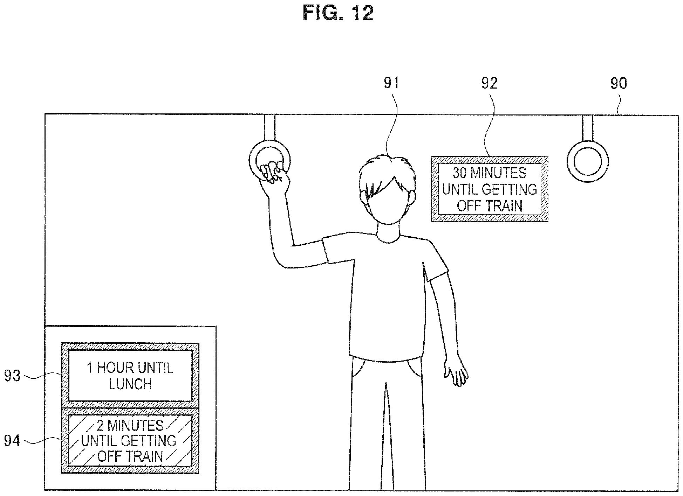

Hereinafter, a display example regarding prediction information of a user himself/herself will be described with reference to FIG. 12.

FIG. 12 is a view for describing a display example performed by the information processing system 1 according to the present embodiment. In a real space image 90 shown in FIG. 12, a state of inside of a train seen from the first user who is sitting in a seat in the train is displayed. In the real space image 90 shown in FIG. 12, not only prediction information 92 of a second user 91 but also pieces of prediction information 93 and 94 of the first user are displayed. The prediction information 92 shows that the second user 91 is predicted to get off the train thirty minutes later. The prediction information 93 shows that the first user is predicted to have a lunch an hour later. The prediction information 94 shows that the first user is predicted to get off the train two minutes later. Herein, in a case where another user pays attention to the prediction information 94 (for example, the prediction information 94 is displayed to a large number of other users), the prediction information 94 may be emphasized as shown in FIG. 12. With this, the first user can know how the second user is to behave on the basis of which prediction information of the first user.

Herein, prediction information may be corrected by the user. From a point of view of display of prediction information to the first user, the server 100 may display prediction information corrected on the basis of an instruction from the second user. For example, in the example shown in FIG. 12, in a case where the pieces of prediction information 93 or 94 are wrong, the first user corrects those pieces of prediction information. This prevents another user from being confused by wrong prediction information. Further, in a case where prediction information is wrong, emphasizing prediction information to which another user pays attention as in the example shown in FIG. 12 can urge the first user to correct the prediction information. With this, for example, in a case where the first user actually gets off the train thirty minutes later, the first user corrects the prediction information 94 from two minutes later to thirty minutes later. Therefore, it is possible to prevent other users therearound from making preparations for the first user getting off the train. As described above, regarding prediction information having a high degree of attention, more accurate information is expected to be presented.

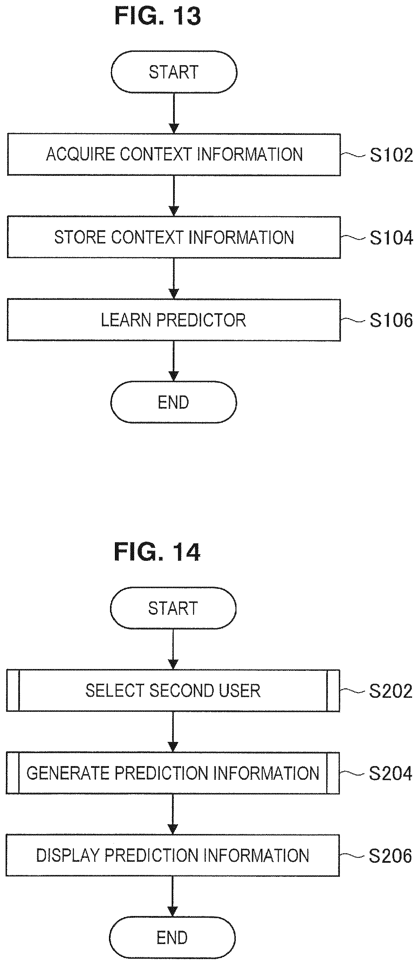

Hereinabove, the technical features of the information processing system 1 according to the present embodiment have been described. Next, an operation processing example of the information processing system 1 according to the present embodiment will be described with reference to FIGS. 13 to 16.

### <<4. Operation processing examples>>

### (1) Learning processing

FIG. 13 is a flowchart showing an example of a flow of learning processing of a predictor executed in the server 100 according to the present embodiment.

As shown in FIG. 13, first, the acquisition unit 141 acquires context information from the user terminal 200 and the recognition device 300 via the communication unit 110 (Step S102) and stores the context information on the context information DB 120 (Step S104). Then, the learning unit 142 learns a predictor on the basis of a history of the context information accumulated in the context information DB 120 (Step S106).

### (2) Display processing

FIG. 14 is a flowchart showing an example of a flow of display processing of prediction information executed in the server 100 according to the present embodiment.

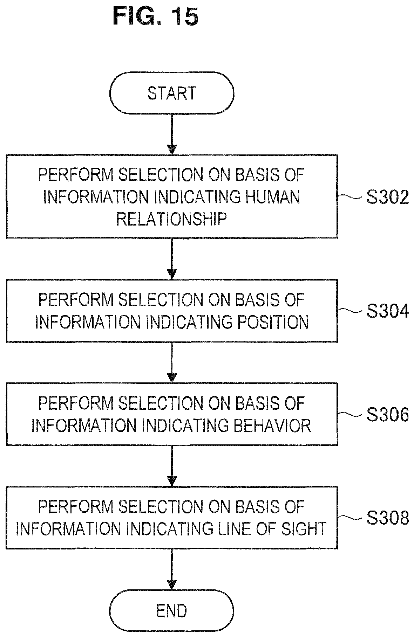

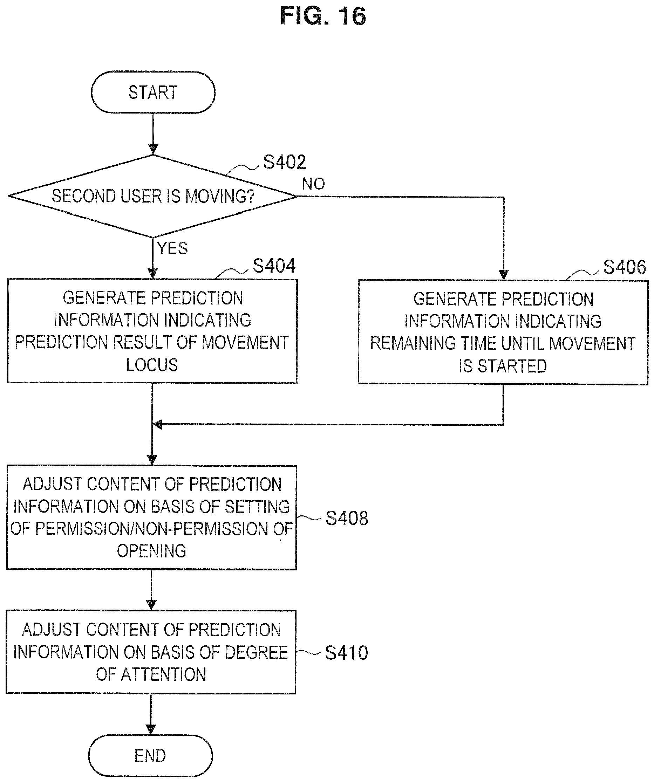

As shown in FIG. 14, first, the generation unit 143 selects the second user (Step S202). The processing herein will be described in detail below with reference to FIG. 15. Then, the generation unit 143 generates prediction information of the second user (Step S204). The processing herein will be described in detail below with reference to FIG. 16. Then, the output control unit 144 causes the user terminal 200 or the output device 400 to display the generated prediction information (Step S206).

Note that order of Steps S202 and S204 may be reversed. In a case where the order is reversed, the generation unit 143 generates prediction information of users who may become the second user (for example, all of other users included in a real space image) and selects prediction information to be displayed therefrom.

### (3) Selection processing of second user

FIG. 15 is a flowchart showing an example of a flow of selection processing of a second user executed in the server 100 according to the present embodiment. This flow shows Step S202 in FIG. 14 in detail.

As shown in FIG. 15, first, the generation unit 143 performs selection on the basis of information indicating a human relationship (Step S302). For example, the generation unit 143 selects another user relevant to the first user, such as another user having a friendship with the first user, as a candidate of the second user. Then, the generation unit 143 performs selection on the basis of information indicating a position (Step S304). For example, the generation unit 143 selects another user who positions in the vicinity of the first user as a candidate of the second user. Then, the generation unit 143 performs selection on the basis of information indicating behavior (Step S306). For example, the generation unit 143 selects another user whose behavior is similar to that of the first user or performs behavior related thereto as a candidate of the second user. Then, the generation unit 143 performs selection on the basis of information indicating a line of sight (Step S308). For example, the generation unit 143 sorts users who have been selected so far as candidates of the second user in accordance with degrees in which the first user pays attention to those users and selects a predetermined number of users in order from a user receiving the highest degree of attention as the second users.

### (4) Generation processing of prediction information

FIG. 16 is a flowchart showing an example of a flow of generation processing of prediction information executed in the server 100 according to the present embodiment. This flow shows Step S204 in FIG. 14 in detail.

As shown in FIG. 16, first, the generation unit 143 determines whether or not the second user is moving (Step S402). In a case where it is determined that the second user is moving (Step S402/YES), the generation unit 143 generates prediction information indicating a prediction result of a movement locus of the second user (Step S404). Meanwhile, in a case where it is determined that the second user is not moving (Step S402/NO), the generation unit 143 generates prediction information indicating a remaining time until movement is started (Step S406).

Then, the generation unit 143 adjusts content of the prediction information on the basis of a setting of permission/non-permission of opening (Step S408). For example, the generation unit 143 simplifies or hides the content of the prediction information in accordance with a human relationship between the first user and the second user. Then, the generation unit 143 adjusts the content of the prediction information on the basis of a degree of attention (Step S410). For example, regarding the second user having a high degree of attention of the first user, the generation unit 143 makes the content of the prediction information finer.

Hereinabove, the operation processing examples of the information processing system 1 according to the present embodiment have been described.

### <<5. Hardware configuration example>>

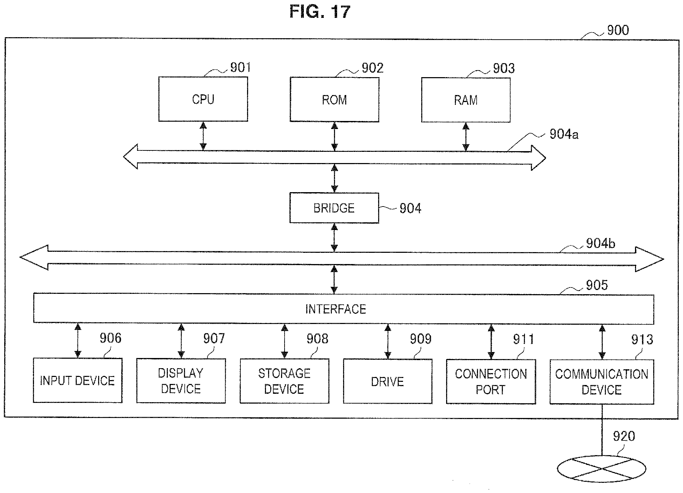

Finally, a hardware configuration of an information processing apparatus according to the present embodiment will be described with reference to FIG. 17. FIG. 17 is a block diagram illustrating an example of the hardware configuration of the information processing apparatus according to the present embodiment. Note that an information processing apparatus 900 shown in FIG. 17 can realize, for example, the server 100, the user terminal 200, the recognition device 300, the output device 400, or the external device 500 shown in FIG. 2. Information processing performed by the server 100, the user terminal 200, the recognition device 300, the output device 400, or the external device 500 according to the present embodiment is realized by cooperation of software with hardware described below.

As illustrated in FIG. 17, the information processing apparatus 900 includes a central processing unit (CPU) 901, a read only memory (ROM) 902, a random access memory (RAM) 903 and a host bus 904a. In addition, the information processing apparatus 900 includes a bridge 904, an external bus 904b, an interface 905, an input device 906, an output device 907, a storage device 908, a drive 909, a connection port 911 and a communication device 913. The information processing apparatus 900 may include a processing circuit such as a DSP or an ASIC instead of the CPU 901 or along therewith.

The CPU 901 functions as an arithmetic processing device and a control device and controls the overall operation in the information processing apparatus 900 according to various programs. Further, the CPU 901 may be a microprocessor. The ROM 902 stores programs used by the CPU 901, operation parameters and the like. The RAM 903 temporarily stores programs used in execution of the CPU 901, parameters appropriately changed in the execution, and the like. The CPU 901 may form the processing unit 140 illustrated in FIG. 2, for example.

The CPU 901, the ROM 902 and the RAM 903 are connected by the host bus 904a including a CPU bus and the like. The host bus 904a is connected with the external bus 904b such as a peripheral component interconnect/interface (PCI) bus via the bridge 904. Further, the host bus 904a, the bridge 904 and the external bus 904b are not necessarily separately configured and such functions may be mounted in a single bus.

The input device 906 is realized by a device through which a user inputs information, for example, a mouse, a keyboard, a touch panel, a button, a microphone, a switch, a lever or the like. In addition, the input device 906 may be a remote control device using infrared ray or other electric waves or external connection equipment such as a cellular phone or a PDA corresponding to manipulation of the information processing apparatus 900, for example. Furthermore, the input device 906 may include an input control circuit or the like which generates an input signal on the basis of information input by the user using the aforementioned input means and outputs the input signal to the CPU 901, for example. The user of the information processing apparatus 900 may input various types of data or order a processing operation for the information processing apparatus 900 by manipulating the input device 906.

In addition, the input device 906 can be made up of a sensor for sensing information on a user. For example, the input device 906 can include various sensors such as an image sensor (for example, camera), a depth sensor (for example, stereo camera), an acceleration sensor, a gyro sensor, a geomagnetic sensor, an optical sensor, a sound sensor, a distance measurement sensor, and a force sensor. Further, the input device 906 may acquire information on a state of the information processing apparatus 900 itself, such as a posture and a moving speed of the information processing apparatus 900, and information on a surrounding environment of the information processing apparatus 900, such as brightness and noise in the vicinity of the information processing apparatus 900. Further, the input device 906 may include a GPS sensor for receiving a GPS signal to measure latitude, longitude, and altitude of a device.

The input device 906 can form, for example, the recognition unit 220 and the recognition unit 320 shown in FIG. 2.

The output device 907 is formed by a device that may visually or aurally notify the user of acquired information. As such devices, there is a display device such as a CRT display device, a liquid crystal display device, a plasma display device, an EL display device, a laser projector, a LED projector or a lamp, a sound output device such as a speaker and a headphone, a printer device and the like. The output device 907 outputs results acquired through various processes performed by the information processing apparatus 900, for example. Specifically, the display device visually displays results acquired through various processes performed by the information processing apparatus 900 in various forms such as text, images, tables and graphs. On the other hand, the sound output device converts audio signals composed of reproduced sound data, audio data and the like into analog signals and aurally outputs the analog signals. The aforementioned display device and sound output device may form the output unit 230 and the output unit 420 illustrated in FIG. 2, for example.

The storage device 908 is a device for data storage, formed as an example of a storage unit of the information processing apparatus 900. For example, the storage device 908 is realized by a magnetic storage device such as an HDD, a semiconductor storage device, an optical storage device, a magneto-optical storage device or the like. The storage device 908 may include a storage medium, a recording medium recording data on the storage medium, a reading device for reading data from the storage medium, a deletion device for deleting data recorded on the storage medium and the like. The storage device 908 stores programs and various types of data executed by the CPU 901, various types of data acquired from the outside and the like. The storage device 908 can form, for example, the context information DB 120 and the predictor DB 130 shown in FIG. 2.

The drive 909 is a reader/writer for storage media and is included in or externally attached to the information processing apparatus 900. The drive 909 reads information recorded on a removable storage medium such as a magnetic disc, an optical disc, a magneto-optical disc or a semiconductor memory mounted thereon and outputs the information to the RAM 903. In addition, the drive 909 can write information on the removable storage medium.

The connection port 911 is an interface connected with external equipment and is a connector to the external equipment through which data may be transmitted through a universal serial bus (USB) and the like, for example.

The communication device 913 is a communication interface formed by a communication device for connection to a network 920 or the like, for example. The communication device 913 is a communication card or the like for a wired or wireless local area network (LAN), long term evolution (LTE), Bluetooth (registered trademark) or wireless USB (WUSB), for example. In addition, the communication device 913 may be a router for optical communication, a router for asymmetric digital subscriber line (ADSL), various communication modems or the like. For example, the communication device 913 may transmit/receive signals and the like to/from the Internet and other communication apparatuses according to a predetermined protocol, for example, TCP/IP or the like. The communication device 913 can form, for example, the communication unit 110, the communication unit 210, the communication unit 310, and the communication unit 410 shown in FIG. 2.

Further, the network 920 is a wired or wireless transmission path of information transmitted from devices connected to the network 920. For example, the network 920 may include a public circuit network such as the Internet, a telephone circuit network or a satellite communication network, various local area networks (LANs) including Ethernet (registered trademark), a wide area network (WAN) and the like. In addition, the network 920 may include a dedicated circuit network such as an internet protocol-virtual private network (IP-VPN).

Hereinbefore, an example of a hardware configuration capable of realizing the functions of the information processing apparatus 900 according to this embodiment is shown. The respective components may be implemented using universal members, or may be implemented by hardware specific to the functions of the respective components. Accordingly, according to a technical level at the time when the embodiments are executed, it is possible to appropriately change hardware configurations to be used.

In addition, a computer program for realizing each of the functions of the information processing apparatus 900 according to the present embodiment may be created, and may be mounted in a PC or the like. Furthermore, a computer-readable recording medium on which such a computer program is stored may be provided. The recording medium is a magnetic disc, an optical disc, a magneto-optical disc, a flash memory, or the like, for example. The computer program may be delivered through a network, for example, without using the recording medium.

### <<6. Conclusion>>

Hereinabove, the information processing system 1 according to an embodiment of the present disclosure has been described in detail with reference to FIGS. 1 to 17. As described above, the information processing system 1 according to the present embodiment can display prediction information of the second user related to context information of the first user, the prediction information being generated on the basis of a history of context information of the second user, to the first user as a target. With this, the prediction information of the second user is presented as information useful to the first user. For the first user, it is possible to visually recognize, for example, future behavior of the second user, and therefore it is possible to perform smooth communication and also to easily lay a plan of behavior of the first user.

Further, the information processing system 1 displays prediction information generated on the basis of context information of the second user as prediction information related to context information of the first user. With this, the first user can know prediction information whose content corresponds to a status in which the first user is put in. For example, in a case where the first user is driving a car, a course of another car is visualized and smooth traffic is realized. Further, in a case where the first user attempts to have a conversation, it is possible to know whether or not the first user can talk to a partner. Further, in a case where the first user is riding on a train, it is possible to know vacancy of a seat in a crowded train in advance. Further, in a case where the first user is headed for a place where the first user visits for the first time, the first user can easily arrive at a destination by following the second user who is headed for a destination same as that of the first user.

Further, the information processing system 1 displays prediction information of the second user selected from a plurality of other users on the basis of context information of the first user. With this, a real space image is prevented from being complicated because an excessive number of pieces of prediction information are displayed.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, in the above embodiment, an example where the user terminal 200 is realized as a see-through HMD has been described. However, the present technology is not limited to this example. For example, the user terminal 200 may be realized as an immersive (video through) HMD that displays a captured image of a real space while displaying a virtual object of AR so that the virtual object is superimposed on the captured image of the real space. Further, regarding the immersive HMD, a captured image of a virtual space may be used instead of a captured image of a real space. Further, the user terminal 200 may be realized as a projection HMD in which, for example, an LED light source for directly projecting an image onto a retina of a user is provided.

Further, in the above embodiment, an example where the server 100 is provided as a single device has been described. However, the present technology is not limited to this example. For example, a part of or the whole server 100 may be included in different devices. For example, the context information DB 120 and the predictor DB 130 may be realized as a device different from the server 100.

Further, in the above embodiment, an example where the user terminal 200 and the server 100 are separately provided has been described. However, the present technology is not limited to this example. For example, a part of or the whole server 100 may be included in the user terminal 200. In that case, accumulation of context information and/or learning of a predictor can be performed in the user terminal 200. The same applies to the recognition device 300 and the output device 400.

Note that it is not necessary for the processing described in this specification with reference to the flowchart to be executed in the order shown in the flowchart. Some processing steps may be performed in parallel. Further, some of additional steps can be adopted, or some processing steps can be omitted.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing apparatus including
   an output control unit configured to output, to a first user, prediction information indicating a prediction result of context information of a second user, the prediction information being related to the context information of the first user and being generated on the basis of a history of the context information of the second user.
(2) The information processing apparatus according to (1),
   in which the output control unit displays the prediction information of the second user selected from a plurality of other users on the basis of the context information of the first user.
(3) The information processing apparatus according to (2),
   in which the output control unit displays the prediction information of the second user who is determined to have context information related to the first user.
(4) The information processing apparatus according to (2) or (3), in which
   the context information includes information indicating a line of sight of a user, and
   the output control unit displays the prediction information of the second user who is determined to receive attention of the first user.
(5) The information processing apparatus according to any one of (2) to (4), in which
   the context information includes information indicating a line of sight of a user, and
   the output control unit displays the prediction information of the second user who is determined to have context information similar to the context information of a third user who has received attention of the first user in the past.
(6) The information processing apparatus according to any one of (1) to (5),
   in which the output control unit displays the prediction information generated on the basis of the context information of the second user.
(7) The information processing apparatus according to (6), in which
   the context information includes information indicating behavior of a user, and
   the output control unit displays the prediction information that varies in accordance with whether or not the second user is moving.
(8) The information processing apparatus according to (7),
   in which, in a case where it is determined that the second user is moving, the output control unit displays the prediction information indicating a prediction result of a movement locus of the second user.
(9) The information processing apparatus according to (7) or (8),
   in which, in a case where it is determined that the second user is not moving, the output control unit displays the prediction information indicating a time at which the second user is predicted to start moving.
(10) The information processing apparatus according to any one of (6) to (9), in which
   the context information includes information indicating a human relationship of a user, and
   the output control unit displays the prediction information corresponding to a human relationship between the first user and the second user.
(11) The information processing apparatus according to any one of (6) to (10), in which
   the context information includes attribute information of a user, and
   in a case where the history of the context information of the second user does not exist or is not enough, the output control unit displays the prediction information generated on the basis of a history of the context information of a third user who is determined to have attribute information similar to attribute information of the second user.
(12) The information processing apparatus according to any one of (1) to (11),
   in which the output control unit displays the prediction information permitted to be displayed by the second user.
(13) The information processing apparatus according to (12),
   in which the permission is given on the basis of a setting regarding at least any one of an instruction from the second user, a position of the second user, and a human relationship between the first user and the second user.
(14) The information processing apparatus according to any one of (1) to (13),
   in which the output control unit displays the prediction information corrected on the basis of an instruction from the second user.
(15) The information processing apparatus according to any one of (1) to (14),
   in which the output control unit displays the prediction information indicating a prediction result of the context information of the first user.
(16) The information processing apparatus according to any one of (1) to (15),
   in which the output control unit displays not only the prediction information but also the context information of the second user.
(17) The information processing apparatus according to any one of (1) to (16),
   in which the context information includes at least any one of information indicating behavior of a user, information indicating a position of the user, information indicating a line of sight of the user, information output by the user, information indicating a state of the user, attribute information of the user, and information indicating a human relationship of the user.
(18) The information processing apparatus according to any one of (1) to (17),
   in which the output control unit causes an output device to display the prediction information, the output device being provided in a terminal device of the first user or in the vicinity of the first user.
(19) An information processing method including
   causing a processor to output, to a first user, prediction information indicating a prediction result of context information of a second user, the prediction information being related to the context information of the first user and being generated on the basis of a history of the context information of the second user.
(20) A program for causing a computer to function as
   an output control unit configured to output, to a first user, prediction information indicating a prediction result of context information of a second user, the prediction information being related to the context information of the first user and being generated on the basis of a history of the context information of the second user.

### Reference Signs List

- 1: information processing system
- 100: server
- 110: communication unit
- 120: context information DB
- 130: predictor DB
- 140: processing unit
- 141: acquisition unit
- 142: learning unit
- 143: generation unit
- 144: output control unit
- 200: user terminal
- 210: communication unit
- 220: recognition unit
- 230: output unit
- 300: recognition device
- 310: communication unit
- 320: recognition unit
- 400: output device
- 410: communication unit
- 420: output unit
- 500: external device

## Claims

1. An information processing apparatus comprising
an output control unit configured to output, to a first user, prediction information indicating a prediction result of context information of a second user, the prediction information being related to the context information of the first user and being generated on the basis of a history of the context information of the second user.

2. The information processing apparatus according to claim 1,
wherein the output control unit displays the prediction information of the second user selected from a plurality of other users on the basis of the context information of the first user.

3. The information processing apparatus according to claim 2,
wherein the output control unit displays the prediction information of the second user who is determined to have context information related to the first user.

4. The information processing apparatus according to claim 2, wherein
the context information includes information indicating a line of sight of a user, and
the output control unit displays the prediction information of the second user who is determined to receive attention of the first user.

5. The information processing apparatus according to claim 2, wherein
the context information includes information indicating a line of sight of a user, and
the output control unit displays the prediction information of the second user who is determined to have context information similar to the context information of a third user who has received attention of the first user in the past.

6. The information processing apparatus according to claim 1,
wherein the output control unit displays the prediction information generated on the basis of the context information of the second user.

7. The information processing apparatus according to claim 6, wherein
the context information includes information indicating behavior of a user, and
the output control unit displays the prediction information that varies in accordance with whether or not the second user is moving.

8. The information processing apparatus according to claim 7,
wherein, in a case where it is determined that the second user is moving, the output control unit displays the prediction information indicating a prediction result of a movement locus of the second user.

9. The information processing apparatus according to claim 7,
wherein, in a case where it is determined that the second user is not moving, the output control unit displays the prediction information indicating a time at which the second user is predicted to start moving.

10. The information processing apparatus according to claim 6, wherein
the context information includes information indicating a human relationship of a user, and
the output control unit displays the prediction information corresponding to a human relationship between the first user and the second user.

11. The information processing apparatus according to claim 6, wherein
the context information includes attribute information of a user, and
in a case where the history of the context information of the second user does not exist or is not enough, the output control unit displays the prediction information generated on the basis of a history of the context information of a third user who is determined to have attribute information similar to attribute information of the second user.

12. The information processing apparatus according to claim 1,
wherein the output control unit displays the prediction information permitted to be displayed by the second user.

13. The information processing apparatus according to claim 12,
wherein the permission is given on the basis of a setting regarding at least any one of an instruction from the second user, a position of the second user, and a human relationship between the first user and the second user.

14. The information processing apparatus according to claim 1,
wherein the output control unit displays the prediction information corrected on the basis of an instruction from the second user.

15. The information processing apparatus according to claim 1,
wherein the output control unit displays the prediction information indicating a prediction result of the context information of the first user.

16. The information processing apparatus according to claim 1,
wherein the output control unit displays not only the prediction information but also the context information of the second user.

17. The information processing apparatus according to claim 1,
wherein the context information includes at least any one of information indicating behavior of a user, information indicating a position of the user, information indicating a line of sight of the user, information output by the user, information indicating a state of the user, attribute information of the user, and information indicating a human relationship of the user.

18. The information processing apparatus according to claim 1,
wherein the output control unit causes an output device to display the prediction information, the output device being provided in a terminal device of the first user or in the vicinity of the first user.

19. An information processing method comprising
causing a processor to output, to a first user, prediction information indicating a prediction result of context information of a second user, the prediction information being related to the context information of the first user and being generated on the basis of a history of the context information of the second user.

20. A program for causing a computer to function as
an output control unit configured to output, to a first user, prediction information indicating a prediction result of context information of a second user, the prediction information being related to the context information of the first user and being generated on the basis of a history of the context information of the second user.
